**Europäisches Patentamt**

**European Patent Office**

**Office européen des brevets**

(11) Veröffentlichungsnummer : **0 482 388 B1**

(19)

(12) **EUROPÄISCHE PATENTSCHRIFT**

(45) Veröffentlichungstag der Patentschrift :
**25.05.94 Patentblatt 94/21**

(21) Anmeldenummer : **91116735.1**

(22) Anmeldetag : **01.10.91**

(51) Int. Cl.⁵ : **H01M 6/52, C25C 3/02**

(54) **Verfahren zur Rückgewinnung von Quecksilber.**

(30) Priorität : **26.10.90 DE 4034137**

(43) Veröffentlichungstag der Anmeldung :
**29.04.92 Patentblatt 92/18**

(45) Bekanntmachung des Hinweises auf die
Patenterteilung :
**25.05.94 Patentblatt 94/21**

(84) Benannte Vertragsstaaten :
**AT BE CH FR LI NL SE**

(56) Entgegenhaltungen :
**DE-A- 3 821 294**
**FR-A- 2 185 671**
**US-A- 4 097 345**

(56) Entgegenhaltungen :
**PATENT ABSTRACTS OF JAPAN vol. 9, no.**
**108 (C-280)(1831) 11. Mai 1985 & JP-A-60 002**
**687 ( HITACHI SEISAKUSHO K.K. ) 8. Januar**
**1985**

(73) Patentinhaber :
**KERNFORSCHUNGSZENTRUM KARLSRUHE**
**GMBH**
**Postfach 36 40**
**D-76050 Karlsruhe (DE)**

(72) Erfinder : **Borgstedt, Hans, Dr.**
**Albert-Schweitzer-Strasse 33**
**W-7500 Karlsruhe (DE)**
Erfinder : **Peric, Zlata**
**Otto-Hahn-Strasse 14**
**W-7514 Egg.-Leopoldshafen (DE)**

EP 0 482 388 B1

## Beschreibung

Die Erfindung betrifft ein Verfahren zur Rückgewinnung von Quecksilber gemäß dem Oberbegriff des Patentanspruchs.

Ein solches Verfahren ist aus der DE 38 21 294 C1 bekannt. Hier wird vorgeschlagen, quecksilberhaltige Feststoffe, insbesondere gebrauchte Quecksilberknopfzellen unter Ausschluß von Sauerstoff bei einer Temperatur zwischen 100° C und 450° C mit flüssigem Natrium reduzierend zu extrahieren. Hierbei bildet sich Natriumamalgam, das von den nicht extrahierbaren Anteilen der Feststoffe abgetrennt und mit Wasser zersetzt wird. Das Quecksilber kann aus der gebildeten Natronlauge isoliert werden.

Bei diesem Verfahren wird das gesamte eingesetzte Natriummetall verbraucht.

Aufgabe der Erfindung ist, bei einem Verfahren der eingangs genannten Art den Verbrauch an Natriummetall zu reduzieren. Aus dem gebildeten Natriumamalgam soll Natriummetall zumindest teilweise wieder zurückgewonnen werden, so daß das Natriummetall erneut zur Extraktion der Feststoffe zur Verfügung steht.

Die Lösung der Aufgabe ist im Kennzeichen des Patentanspruchs beschrieben.

Erfindungsgemäß umfaßt die Weiterbehandlung des Natriumamalgams einen Elektrolyseschritt. Die Elektrolyse wird in der Weise durchgeführt, daß Natriumamalgam mit der Anode einer Spannungsquelle und ein Vorrat von Natriummetall mit der Kathode der Spannungsquelle verbunden werden.

Das Amalgam ist vom Natriummetall durch eine Trennwand aus Natriumionen leitenden $\beta$-Aluminiumoxid getrennt. Sowohl das Amalgam als auch das Natriummetall werden während der Elektrolyse in schmelzflüssigem Zustand gehalten.

Das schmelzflüssige Natriumamalgam wird vorzugsweise direkt in ein Gefäß gefüllt, das zumindest teilweise aus $\beta$-Aluminiumoxid gefertigt wurde. Dieses Gefäß wird mit einem Vorrat an flüssigem Natriummetall in Kontakt gebracht. Das Gefäß muß in der Weise gefertigt sein, daß seine Wandung aus $\beta$-Aluminiumoxid sowohl mit dem Natriumamalgam als auch mit dem Natriummetall in Kontakt steht.

Vorzugsweise weist das Gefäß eine Heizung auf, mit der sowohl das Amalgam wie auch das Natriummetall in schmelzflüssigem Zustand gehalten werden kann.

Zur Elektrolyse wird vorzugsweise eine Temperatur von 200° C bis 350° C aufrechterhalten. Bei dieser Temperatur bewirkt eine Spannung von 1 Volt einen Strom in der Größenordnung von mindestens 0,075 Amp/cm$^2$ bis zu 1 Amp/cm$^2$. Die Stromausbeute in Bezug auf das transportierte Natrium kann je nach Quecksilbergehalt des Amalgams 0,4 des theoretischen Wertes erreichen.

Bei der Elektrolyse wandert Natrium aus dem Amalgam in den Vorrat des Natriummetalls und kann somit erneut zur Extraktion der Feststoffe verwendet werden.

Mit zunehmender Anreicherung des Quecksilbers im Amalgam kann die Elektrolyse unwirtschaftlich werden. Vorzugsweise wird sie daher in diesem Stadium abgebrochen und das quecksilberhaltige Natriumamalgam in der bekannten Weise aufgearbeitet.

Bei einem kontinuierlichen Verfahren kann die Quecksilberkonzentration im Amalgam jedoch durch laufende Zudosierung von neu gebildetem, quecksilberarmem Amalgam auf dem erwünschten niedrigen Wert gehalten werden.

Der wesentliche Vorteil des erfindungsgemäßen Verfahrens besteht darin, daß insgesamt Energie eingespart wird, weil das Natrium zur Extraktion der Feststoffe zumindest teilweise wieder rezykliert werden kann. Die notwendigen Verfahrenskomponenten sind aus dem sogenannten AMTEC-Verfahren (Alkali-Metal-Thermo-Electric Converter) bekannt und erprobt. Das AMTEC-Verfahren ist eingehend in der Veröffentlichung von F. Huber, V. Heinzel, W. Peppler und H. Will, KfK-Nachrichten des Kernforschungszentrums Karlsruhe, Jahrgang 22, (3/90) Seiten 152 bis 162 beschrieben.

Die Erfindung wird im folgenden anhand von Figuren und Durchführungsbeispielen näher erläutert.

Fig. 1 zeigt den Aufbau der Versuchsvorrichtung zur Durchführung des Versuche.

Fig. 2 stellt das Na-Hg-Phasendiagramms dar.

In Fig. 3 ist der Temperaturverlauf der Zellspannung in den ersten sechs Versuchen (oberes Diagramm) und im letzten Versuch (unteres Diagramm) dargestellt.

Fig. 4 zeigt den Stromfluß der Zelle als Funktion der Spannung bei 250° C.

Fig. 5 zeigt das Anwachsen der Zellspannung mit der Zahl der Versuche aufgrund der Verarmung an Natrium.

Fig. 6 stellt die Abnahme der Natriumgehalte in den Amalgamen infolge der einzelnen Elektrolyseversuche als Funktion der Elektrolysedauer dar.

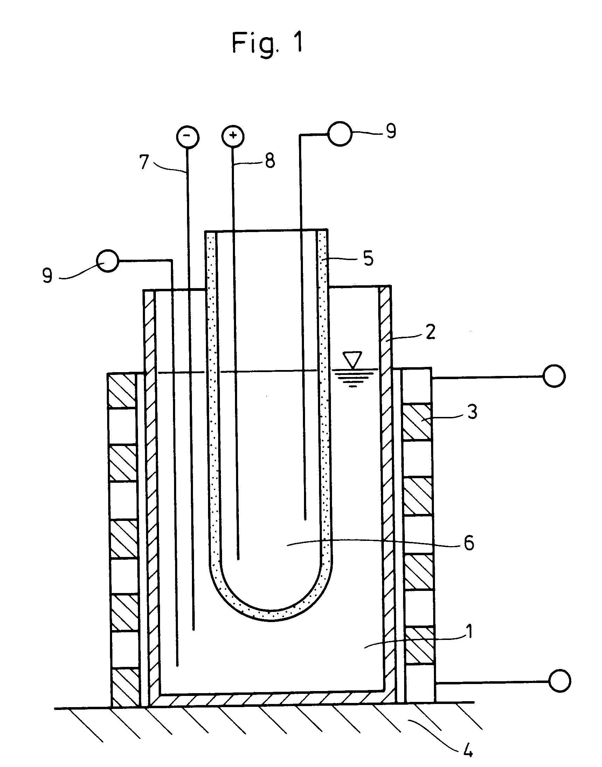

Fig. 1 zeigt den Aufbau der für die Durchführungsbeispiele verwendeten Anordnung.

Das flüssige Natrium 1 befindet sich in einem Stahlzylinder 2 von 50 mm innerem Durchmesser und 80 mm Höhe. Dieser ist von einer Heizmanschette 3 mit einer Leistung von 500 W umgeben, der Boden 4 ist zur Vermeidung von Wärmeverlusten mit einer Isolierschicht unterlegt. In diesen Zylinder 2 taucht ein einseitig halbkugelig geschlossenes Rohr 5 aus β''-Aluminiumoxid ein. Dieses hat einen Durchmesser von 25 mm, eine Wandstärke von 1,3 mm und eine Länge von 210 mm. Von der Länge wird hier jedoch nur ein kleiner Teil genutzt, da nur 40 mm in das geschmolzene Natrium eintauchen. Für eine technische Nutzung des erfindungsgemäßen Verfahrens sind etwa 150 mm Rohrlänge anzusetzen, wobei mehrere Rohre aus β''-Aluminiumoxid parallel in die Natriumschmelze eintauchen können. In dem Rohr aus dem Festelektrolyten befindet sich die Na-Hg-Legierung 6. In beide Metallschmelzen tauchen die elektrischen Zuleitungen aus Edelstahl 7, 8, ebenso sind Thermoelemente 9 in die Metalle eingebracht.

Durchführungsbeispiele (Versuche 1 bis 8)

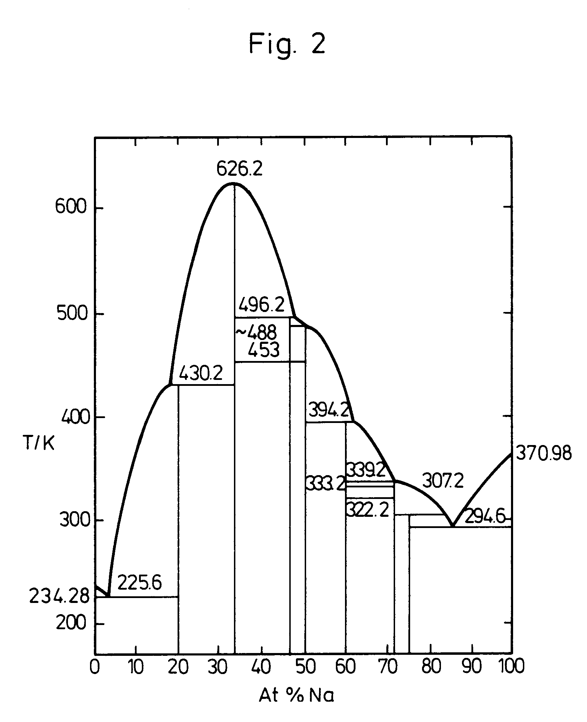

Das Na-Hg-Phasendiagramms ist in Fig. 2 dargestellt; aus diesem geht hervor, daß die Amalgame dieser Zusammensetzung unterhalb der Schmelztemperatur des Natriums (Fp = 97,81° C) schmelzen, während in den an Quecksilber reicheren Amalgamen Temperaturen bis etwa 350° C nötig sind, um sie in allen Zusammensetzungen flüssig zu halten.

Das Amalgam wurde unter starker Wärmeentwicklung aus 12,43 g Na und 34,50 g Hg in einer Schutzgasbox gemischt, der Hg-Anteil betrug also 24,15 at-%. Die Na-Menge im Stahlbehälter 2 wurde so bemessen, daß die Füllhöhe etwa gleich hoch wie die im Keramikrohr 5 war. Die benetzte Fläche des Elektrolytrohrs 5 betrug außen 43,19 und innen 36,81, im Mittel 40 cm$^2$.

Zur Elektrolyse wurde eine Gleichstromquelle von wahlweise bis zu 2,5 oder 10 V stufenlos regelbarer Gleichspannung verwendet. Zur Messung der Zellspannung der Ketten

$$Hg-Na //β''-Aluminiumoxid//Na$$

wurde ein Multimeter eingesetzt. Der Versuchsaufbau wurde in der Schutzgasbox unter Reinstargon mit weniger als $10^{-6}$ Volumenanteilen Feuchte und Sauerstoff vorgenommen.

Zur Ausführung der Elektrolyseversuche wurden die Heizung 3 mit der Regeleinheit in Betrieb genommen. Die Regelung wurde auf die gewünschte Temperatur im Bereich 250 bis 350° C eingestellt. Die Aufheizung erfolgte in einigen Minuten, der Schmelzpunkt des Natriums wurde als Haltepunkt beim Heizen jeweils registriert. Die Temperaturmeßstellen zeigten befriedigend übereinstimmende Werte.

Nach Erreichen und Stabilisierung der Versuchstemperatur wurden zunächst die Zellspannungen gemessen, die gut reproduzierbar waren. Die am Anfang eines Versuchs gemessenen Spannungen entsprachen den Endwerten des vorhergehenden Versuchs. Die Spannungen dienten zur Berechnung der chemischen Aktivität des Natriums im Amalgam. Die Konzentrationen an Natrium wurden aus den Schmelztemperaturen des Amalgams, gemessen während der Abkühlung, abgelesen (s. Fig. 2).

Die Versuche wurden in der Regel über eine Stunde durchgeführt, dabei wurde bei konstanter Spannung (des Spannungsgebers) der Strom registriert. Solche Messungen wurden als Funktion der Temperatur vorgenommen, zwischen den Versuchen wurden die Zellen auf Raumtemperatur abgekühlt.

Nach der einstündigen Messung wurden die Elektrolysespannungen auf Null reduziert, und dann die Zellspannungen während der Abkühlung gemessen.

Versuchsergebnisse:

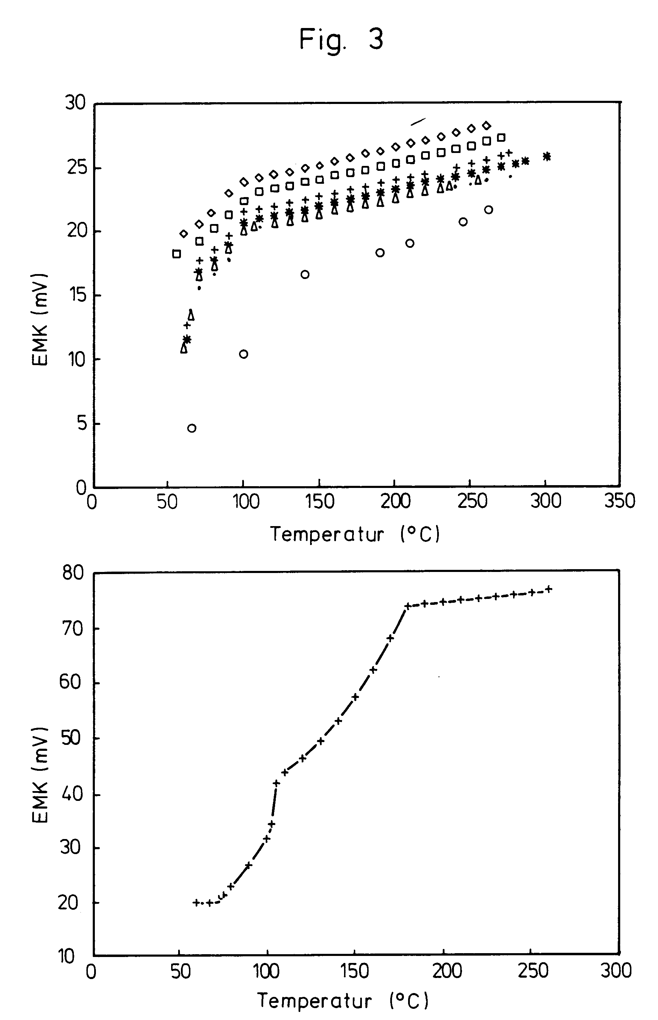

Die Fig. 3 (oberer und unterer Teil) enthalten die Verläufe der Zellspannungen während der Abkühlung für alle Versuche, der letzte Versuch ist wegen der komplizierten Kurve getrennt dargestellt. Die Temperaturabhängigkeit der Zellspannung scheint über einen weiten Bereich konstant zu sein; dieser Bereich wird von den Schmelzpunkten der Flüssigmetalle begrenzt. Bei den an Quecksilber reicheren Amalgamen befinden wir uns in einem komplizerteren Bereich des Phasendiagramms, deshalb treten mehrere Änderungen des Temperaturverlaufs auf. Mit dem Erstarren des Natriums beginnt ein starker Abfall der Zellspannung, der sich beim Erstarren des Amalgams noch verstärkt.

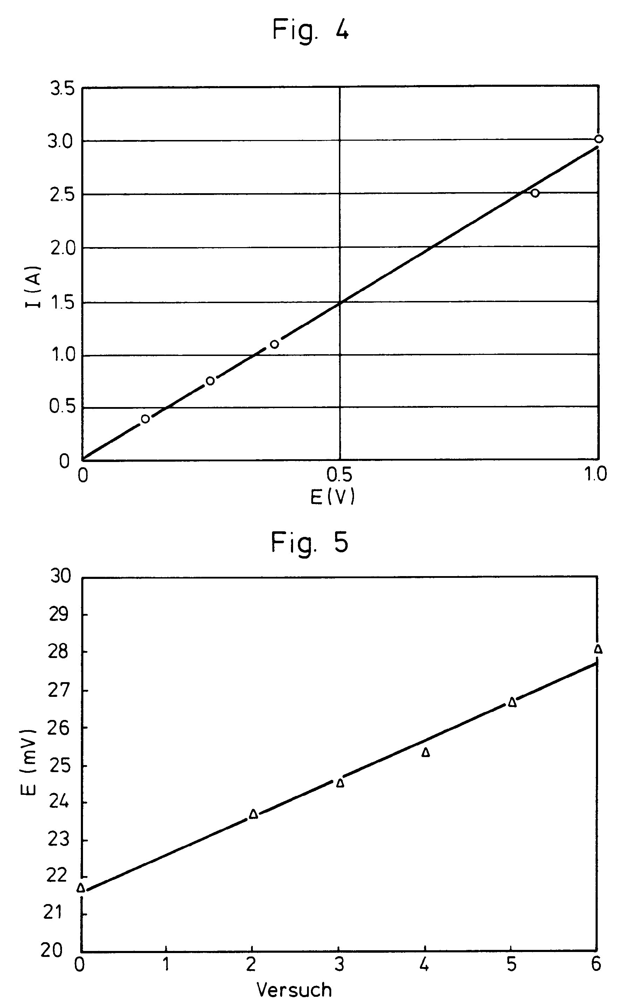

Die Stromflüsse in der Zelle waren im Spannungsbereich 0,125 bis 1,00 V linear von der angelegten Spannung abhängig. Wie Fig. 4 zeigt, ist der Zusammenhang zwischen Strom und Spannung linear. Die Stromdichte durch den Elektrolyten betrug bei diesen Versuchen entsprechend der Fig. 4 0,0075 bis 0,075 A/cm$^2$, die Leistung lag bei 0,05 bis 3,0 W. In einzelnen Versuchsabschnitten wurden Stromdichten bis 0,2 Amp/cm$^2$ erreicht. Die Aluminiumoxid-Rohre sind bis zu 1 Amp/cm$^2$ belastbar.

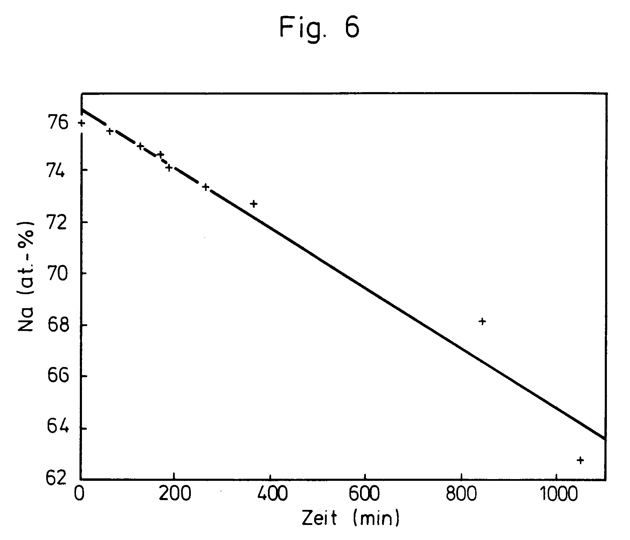

Die Verschiebung der Zellspannung zu höheren Werten zeigte deutlich einen Transport von Natrium durch den Elektrolyten zum Natriumvorrat hin an. Die Zellspannungen (auf 250° C normiert) nach den einzelnen Versuchen sind in Fig. 5 aufgetragen. Die Konzentrationen nach den Versuchen wurden aus den Schmelztemperaturen der Amalgame ermittelt. Die Abnahme der Natriumgehalte in den Amalgamen nach den einzelnen Versuchen ist in der Fig. 6 als Funktion der Elektrolysedauer dargestellt. Die Konzentrationsabnahme läßt sich als folgende Zeitfunktion darstellen:

3

EP 0 482 388 B1

$$X_{Na}/at\text{-}\% = 75{,}946 - 0{,}4923 \cdot t/min$$

Im dritten Versuch im Bereich der hohen Natriumkonzentrationen wurden in 1800 s bei einem Strom von 0,6 A rund 0,26 g Na elektrolytisch transportiert. Im achten Versuch betrug die transportierte Menge Na 1,80 g, dazu waren 12600 s lang 0,6 A geflossen. In einem nachfolgenden Versuch wurde eine Menge von insgesamt 8,75 g Na aus einer Menge von 46 g Amalgam mit ursprünglich 75,8 at-% Na elektrolytisch abgetrennt. Der Restgehalt im Amalgam betrug weniger als 50 at-% Na. Der Schmelzpunkt des Amalgams lag bei 220° C. Die Stromausbeute erreichte nahezu die theoretischen Werte.

Tabelle: Überblick über die Versuchsergebnisse:

| Versuch | EMK (mV) | I (A) | $a_{Na}$ | $c_{Na}$ (at-%) |
|---|---|---|---|---|
| 0 | 21,7 | --- | 0,62 | 75,85 |
| 1 | 24,0 | 0,25 | 0,59 | 75,53 |
| 2 | 23,7 | 0,475 | 0,59 | 74,9 |
| 3 | 24,5 | 0,6 | 0,58 | 74,6 |
| 4 | 25,3 | 0,3 | 0,57 | 74,07 |
| 5 | 26,6 | 0,4 | 0,554 | 73,34 |
| 6 | 28,0 | 2,5 | 0,537 | 72,68 |
| 7 | 42,6 | 0,6 | 0,388 | 68,16 |
| 8 | 76,1 | 0,6 | 0,185 | 62,77 |

**Patentansprüche**

1.  Verfahren zur Rückgewinnung von metallischem und/oder chemisch gebundenem Quecksilber aus quecksilberhaltigen Feststoffen, insbesondere gebrauchten Quecksilberknopfzellen, unter Ausschluß von Sauerstoff, bei dem
    a) die Feststoffe bei einer Temperatur zwischen 100° C und 450° C mit flüssigem Natrium reduzierend extrahiert werden, wobei sich Natriumamalgam bildet,
    b) das Natriumamalgam von den nicht extrahierbaren Anteilen der Feststoffe abgetrennt und
    c) weiterbehandelt wird,
    dadurch gekennzeichnet, daß
    d) die Weiterbehandlung einen Elektrolyseschritt umfaßt, wobei
    - das Natriumamalgam in ein Gefäß gefüllt wird, das
    - aus einem Na-Ionen leitenden β-Aluminiumoxid gefertigt wurde,
    - das gefüllte Gefäß mit flüssigem Natriummetall in Kontakt gebracht wird,
    - Natriumamalgam und Natriummetall zur der Elektrolyse in der Weise mit einer Spannungsquelle verbunden werden, daß das Natriumamalgam an der Anode und das Natriummetall an der Kathode der Spannungsquelle angeschlossen sind, und
    - während der Elektrolyse in schmelzflüssigem Zustand gehalten werden.

**Claims**

1.  Process for the recovery of mercury as metal and/or chemically bound from mercury-containing solids, especially used mercury round cells, exclusive of oxygen, with
    (a) the solids extracted by reduction by means of liquid sodium at a temperature between 100 °C and 450 °C, while sodium amalgam is formed,
    (b) the sodium amalgam separated from the not extractable portions of the solids and
    (c) subjected to further treatment, characterized by

4

(d) the further treatment including an electrolytic step with
- the sodium amalgam filled into a vessel
- made of a sodium-ion-conducting β-aluminum oxide
- the filled vessel brought into contact with liquid sodium metal
- sodium amalgam and sodium metal connected with a voltage source for electrolysis in such a way that the sodium amalgam is connected to the anode and the sodium metal to the cathode of the voltage source, and
- the molten state maintained during electrolysis.

## Revendications

1.  Procédé de récupération de mercure métal et/ou chimiquement lié à partir de solides contenant du mercure, notamment de piles rondes au mercure usagées, en l'absence d'oxygène dans lequel :

    a) on extrait les solides à une température comprise entre 100°C et 450°C de façon réductrice avec du sodium liquide, ce qui forme de l'amalgame de sodium,

    b) on sépare l'amalgame de sodium des fractions de solide non extractibles et

    c) on continue le traitement,

    caractérisé en ce que

    d) le traitement ultérieur comprend une étape d'électrolyse,

    - on place l'amalgame de sodium dans une cuve, réalisée en oxyde d'aluminium β conduisant les ions Na,
    - la cuve remplie est mise au contact de métal sodium liquide,
    - l'amalgame de sodium et le métal sodium sont reliés pour l'électrolyse à une source de tension de sorte que l'amalgame de sodium soit branché à l'anode et le métal sodium à la cathode de la source de tension, et
    - pendant l'électrolyse on maintient à l'état liquide fondu.

# Fig. 1

Fig. 2

# Fig. 3

# Fig. 4

# Fig. 5

## Fig. 6